# EUROPEAN PATENT APPLICATION

(11) **EP 2 848 844 A1**
(43) Date of publication of application: **18.03.2015**
(21) Application number: 13184811.1
(22) Date of filing: 17.09.2013
(51) Int. Cl.: F16K 1/42, F01D 17/14

(54) **Valve assembly**

(71) Applicant: ALSTOM Technology Ltd, 5400 Baden (CH)
(72) Inventor: Pfanner, Martin, 79664 Wehr (DE)

(57) **Abstract**

A valve assembly (10) characterised by comprising casing (16) that has a contact face (41) in contact with a seat (28). The contact face has a chamfered face (42) and a straight face (44) that is downstream of and adjacent to the chamfered face (42). The straight face extends parallel to an axial extension of the seat (28). The valve assembly results in low stress concentration in the casing (16).

## Description

### TECHNICAL FIELD

The present disclosure relates generally to valve lifetime and more specifically to valves with seats that are removably fitted within a valve casing.

### BACKGROUND INFORMATION

Operation of a steam turbine may require application of valves that control steam flow upstream of machinery. Typically, there are two types of valves, control valves and stop valves. Some modern steam turbines have valves with combined control and stop valve functions within the same casing. Whether the valve is designed for combined function or separate functions the steam valves typically have a plug that interacts with a seat to define valve open and closed states. Both the seat and the plug are typically prone to erosion and wear and therefore is may be desirable for the valve to be designed such that these parts are replaceable. This typically requires the seat to be fitted within a step within the casing. Although this arrangement typically provides secure fitting and ease of replacement of the seat the step may result in stress concentration which may lead to crack formation in the casing. As the casing is a major part of the valve, a crack in the casing typically cannot be repaired thus requiring replacement of the valve.

### SUMMARY

A valve assembly is provided that at least mitigates the problem of removably securing a seat within a casing while reducing stress concentration in the casing, thus providing a means of extending the lifetime of the valve.

It attempts to addresses this problem by means of the subject matter of the independent claim. Advantageous embodiments are given in the dependent claims.

An aspect provides a valve assembly comprising a casing with a flow inlet and a flow outlet, a seat that is located in the casing between the flow inlet and the flow outlet, and a plug, that is also located in the casing and configured and arranged to be moveable between a closed position in which the plug is in contact with the seat so by fluidly disconnecting the flow inlet from the flow outlet and an open position in which a gap is formed between the plug and the seat so by fluidly connecting the flow inlet and the flow outlet. The aspect further provides that a contact face in contact with the seat comprises a chamfered face and a straight face, downstream of and adjacent to the chamfered face, extending parallel to an axial extension of the seat.

In a further aspect, the chamfered face forms a cone shape and the straight face forms a cylindrically shape.

In a further aspect, the chamfered face and the straight face join with a radius.

In an aspect the seat is shrunk fit within the casing.

In a further aspect, the valve assembly is configured as a steam valve assembly.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings which by way of example illustrate exemplary embodiments of the present invention.

### BRIEF DESCRIPTION OF THE DRAWINGS

By way of example, an embodiment of the present disclosure is described more fully hereinafter with reference to the accompanying drawings, in which:

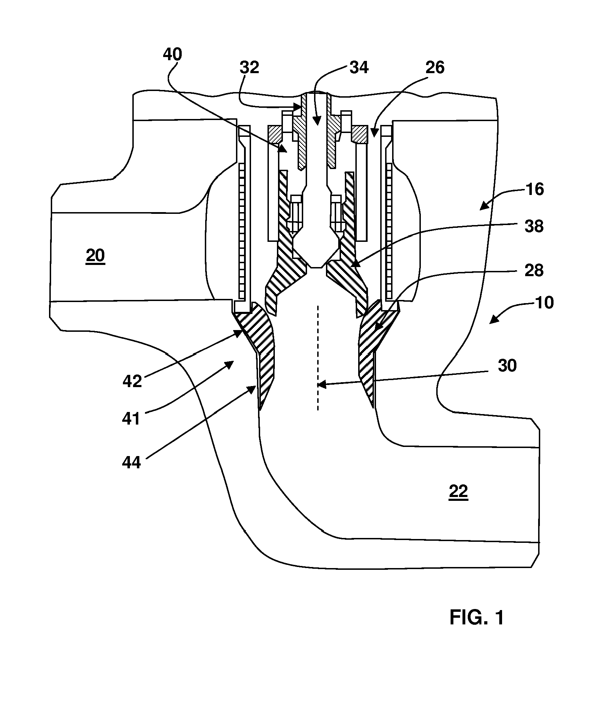

Figure 1 is a sectional view of a control valve with a bypass passage according to an preferred embodiment of the invention; and

### DETAILED DESCRIPTION

Exemplary embodiments of the present disclosure are now described with reference to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiments disclosed herein.

FIG. 1 shows a valve assembly 10 with an exemplary embodiment. The control assembly 26 operates between an open and closed mode as well as in intermediate positions to modulate flow. The valve assembly 10 includes a casing 16 with a flow inlet 20, a flow outlet 22, and an internal control assembly 26 and corresponding seat 28. Flow enters the valve assembly 10 through the flow inlet 20 and exits the valve assembly 10 through flow outlet 22. The control assembly 26 includes a bushing 32, a stem 34, a plug 38, and a balance chamber 40. The seat 28 is an insert that is removably fitted within the casing 16. In an exemplary embodiment applicable to any of the described exemplary embodiments, the seat 28 is configured as a diffuser.

The plug 38 is generally annular and is positioned above, that is upstream of, the seat 28. The plug 38 is moveable in a direction towards the seat 28 and in a direction away from the seat 28 to modulate flow out of the flow outlet 22.

Although the seat 28 is shown as a single piece, in alternative embodiments the seat 28 may include more than one part wherein at least the portion of the seat 28 which contacts the plug 38 is removably fitted.

In an exemplary embodiment, as shown in FIG. 1 the contact face 41 between the seat 28 and the casing 16 includes an chamfered face 42 and a downstream straight face 44 adjacent of the chambered face 42. The straight face 44 extends parallel to the general flow direction through the seat 28. This direction is defined by the central extensional axis of the seat 28.

Typically, in this arrangement, when the seat 28 comprises an annular seat 28, the chamfered face 42 has a cone shape while the straight face 44 has a cylindrical shape. In an exemplary embodiment, the join between the chamfered face 42 and the straight face 44 comprises a large radius curve thus avoiding stress concentration which would result if the join was sharp edged.

In an exemplary embodiment, in order for the seat 28 to be removable, the seat 28 is shrunk fit into position within the casing 16 such that it is in contact with both the chamfered face 42 and the straight face 44.

In an exemplary embodiment, the valve assembly 10 is utilized in a steam turbine system, and is used for directing the supply of steam to machinery located within the steam turbine. However it is understood that the valve assembly 10 may also be employed in other applications as well.

Although the disclosure has been herein shown and described in what is conceived to be the most practical exemplary embodiment, it will be appreciated that the present disclosure can be embodied in other specific forms. For example, although exemplary embodiment applied to control valves has been describe, the described exemplary embodiments could equally be applied to stop valves and manual valves. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: valve assembly
- 16: casing
- 20: flow inlet
- 22: flow outlet
- 26: control assembly
- 28: seat
- 30: extensional axis
- 32: bushing
- 34: stem
- 38: plug
- 40: balance chamber
- 41: contact face
- 42: chamfered face (42)
- 44: straight face (44)

## Claims

1. A valve assembly (10) comprising:
a casing (16) with a flow inlet (20) and a flow outlet (22);
a seat (28), in the casing (16), the between the flow inlet (20) and the flow outlet (22); and
a plug (38), in the casing (16), configured and arranged to be moveable between:
a closed position in which the plug (38) is in contact with the seat (28) so by fluidly disconnecting the flow inlet (20) from the flow outlet (22); and
an open position in which a gap is formed between the plug (38) and the
seat (28) so by fluidly connecting the flow inlet (20) and the flow outlet (22), **characterised by** the casing (16) comprising a contact face (41) in contact with the seat (28) having:
a chamfered face (42); and
a straight face (44), downstream of and adjacent to the chamfered face (42), extending parallel to an axial extension of the seat (28).

2. The valve assembly (10) of claims 1 wherein the chamfered face (42) forms a cone shape.

3. The valve assembly (10) of claim 1 wherein the straight face (44) forms a cylindrically shape.

4. The valve assembly (10) of any one of claims 1 to 3 wherein the chamfered face (42) and the straight face (44) join with a radius.

5. The valve assembly (10) of claim 1 wherein a join between the seat (28) and the casing (16) is defined by being shrunk fit.

6. The valve assembly (10) of any one of the claims 1 to 5 configured as a steam valve assembly (10).
